# EUROPEAN PATENT APPLICATION

(11) **EP 1 109 335 A2**
(43) Date of publication of application: **20.06.2001**
(21) Application number: 00310956.8
(22) Date of filing: 08.12.2000
(51) Int. Cl.: H04B 10/155, H04B 10/145

(54) **Method to actively assure correct channel selection in a wavelength stabilized control system**

(30) Priority: 15.12.1999 US 461617
(71) Applicant: LUCENT TECHNOLOGIES INC., Murray Hill, New Jersey 07974-0636 (US)
(72) Inventor: Stayt, John W., Jr., Schnecksville, PA 18078 (US); O'Brien, Steve, Orefield, PA 18069 (US); Broutin, Scott L., Kutztown, PA 19530 (US); Hartman, Robert L., Warren Township, New Jersey 07059 (US)
(74) Representative: Perkins, Sarah

(57) **Abstract**

A laser module, disposed within a wavelength stabilized control system, is provided with an integral modulator and optical amplifier. The laser module has a first output connected to an optical link and a second output connected to a controller via a signal discriminator circuit. The controller controls a channel selection process for the system. During the channel selection process, the controller adjusts a gain section, the modulator and amplifier as necessary to reduce the transmission power of the first and second outputs so that the first output can not be detected by a receiver connected to the link. The controller initiates the channel selection process by adjusting the laser module and monitoring etalon characteristics of the second output. By tracking the etalon characteristics, the controller can determine when a wavelength of a desired channel has been obtained. Once the wavelength has been obtained it is locked and stabilized. Subsequently, the controller adjusts the gain section, modulator and amplifier to obtain transmission power for the first and second outputs allowing the first output to be detected by a receiver connected to the link. This way, a channel selection process can be performed without turning off the laser module, or its outputs, and without corrupting any data on the optical link.

## Description

### Field Of The Invention

The present invention relates generally to tunable lasers and other tunable optical signal sources and, more particularly, to a method and apparatus for actively assuring correct channel selection in a wavelength stabilized control system containing a tunable laser or tunable optical signal source.

### Description Of The Related Art

Optical fiber communications systems provide for low loss and very high information carrying capacity. In practice, the bandwidth of optical fiber may be utilized by transmitting many distinct channels simultaneously using different carrier wavelengths. The associated technology is called wavelength division multiplexing (WDM).

The wavelength bandwidth that any individual channel occupies depends on a number of factors, including the impressed information bandwidth, and margins to accommodate carrier frequency drift, carrier frequency uncertainty, and to reduce possible inter-channel cross-talk due to non-ideal filters.

To maximize the number of channels, lasers with stable and precise wavelength control are required to provide narrowly spaced, multiple wavelengths. However, in practice, a laser generates light over rather broad bandwidths referred to as the laser gain curve. The only longitudinal-mode discrimination in conventional Fabry-Perot lasers is provided by the gain spectrum itself. Since the laser cavity is a type of Fabry-Perot interferometer, the energy output over the gain curve is not continuous but occurs at discrete, closely spaced frequencies. The output frequencies are based upon the number of discrete longitudinal modes that are supported by the laser cavity. The longitudinal modes will occur at wavelengths such that an integral number of half wavelengths equals the distance between the mirrors of the resonator in the laser. Laser oscillation can occur only at frequencies where the laser gain curve exceeds the losses in the optical path of the resonator. In practice, the broadened laser gain curve exceeds the cavity losses over a large frequency range, on the order of 8 to 10 GHz.

Various approaches have been used to limit the oscillation of a laser to one of the competing longitudinal modes. One approach is a distributed feedback mechanism. Distributed-feedback (DFB) lasers are the most common type of communications laser. A grating integral to the laser structure limits the output to a single frequency. Another of the most common methods requires the use of a frequency selective external cavity/etalon in combination with such a laser device to detect the output wavelength at which the laser is operating and adjust the laser accordingly by varying the temperature of the laser, known as temperature tuning. Such a method allows for wavelength locking of a laser even in the event of changing ambient temperature conditions.

Etalon based wavelength stabilized laser sources are rapidly becoming preferred within the optics field. Systems incorporating an etalon based wavelength stabilized laser source are sometimes referred to as wavelength stabilized control systems. These systems typically have a life of 25 years.

Etalon based wavelength stabilized laser sources and control systems require real-time wavelength changes, particularly when requests are made to change channels. To prevent data corruption on other active channels in the system, a wavelength change or any noticeable wavelength skew should not be transmitted past these other active channels. Accordingly, the system does not want its laser source to transmit during a wavelength or channel change. In today's wavelength stabilized systems this typically means that in order to change a wavelength, the system must first turn off the laser source. Once the laser source is off, it is heated or cooled to a temperature corresponding to the wavelength of the desired channel. The laser source is subsequently turned back on and it should be locked on to the wavelength of the desired channel.

Etalon based wavelength stabilized laser sources and control systems have infinite and multi-valued wavelength locking choices. By turning off the laser source prior to making the adjustments deemed necessary to lock onto the desired wavelength, current systems are changing channels in the dark and based solely on the laser source's temperature. Since these systems have an infinite amount of locking choices, and the channel selection is based solely on temperature, they can not properly detect if the laser source has locked onto the desired wavelength or if it has hopped etalon modes and is on the wrong wavelength. Thus, by using the above-described technique, today's wavelength stabilized control systems cannot ensure that a correct channel has been selected.

Accordingly, there is a desire and need for a mechanism to actively (i.e., while the laser source is on and transmitting) assure that correct channel selections are made in a wavelength stabilized control system.

### Summary Of The Invention

The present invention provides a method and apparatus for actively assuring that correct channel selections are made in a wavelength stabilized control system.

The present invention also provides a method and apparatus for assuring that correct channel selections are made in a wavelength stabilized control system without turning off the system's laser source during the channel selection process.

The above and other features and advantages of the invention are achieved by providing a laser module, disposed within a wavelength stabilized control system, with an integral modulator and an optical amplifier. The laser module has a first output connected to an optical link and a second output connected to a controller via a signal discriminator circuit. The controller controls a channel selection process for the system. During the channel selection process, the controller adjusts a gain section, the modulator and amplifier as necessary to reduce the transmission power of the first and second outputs so that the first output can not be detected by a receiver connected to the link (i.e., a far end user of the system). The controller initiates the channel selection process by adjusting the laser module and monitoring etalon characteristics of the second output. By tracking the etalon characteristics, the controller can determine when a wavelength of a desired channel has been obtained. Once the wavelength has been obtained it is locked and stabilized. Subsequently, the controller adjusts the gain section, modulator and amplifier to obtain transmission power for the first and second outputs allowing the first output to be detected by a receiver connected to the link. This way, a channel selection process can be performed without turning off the laser module, or its output, and without corrupting any data on the optical link.

### Brief Description Of The Drawings

The foregoing and other advantages and features of the invention will become more apparent from the detailed description of the preferred embodiments of the invention given below with reference to the accompanying drawings in which:
Fig. 1 illustrates a wavelength stabilized control system constructed in accordance with an embodiment of the present invention;
Fig. 2 is a block diagram illustrating the varying components of a laser module used in the system of Fig. 1;
Fig. 3 illustrates in flow chart form an exemplary method of actively assuring correct channel selection in the system of Fig. 1;
Fig. 4 illustrates exemplary reference and etalon signals used during the channel selection process illustrated in Fig. 3;
Fig. 5 illustrates an exemplary set of amplifier current curves used during the channel selection process illustrated in Fig. 3; and
Fig. 6 illustrates in flowchart form an exemplary process for determining whether a correct channel has been selected during the channel selection process of Fig. 3.

### Description Of Preferred Embodiments

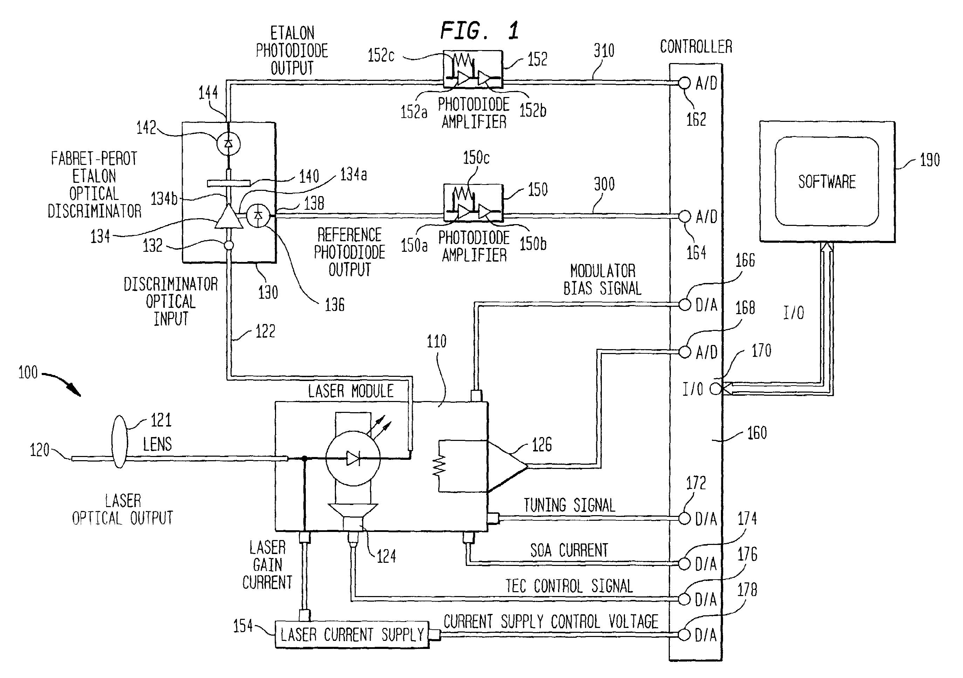

Fig. 1 illustrates in block diagram form a portion of a typical wavelength stabilized control system 100. More specifically, Fig. 1 illustrates a system 100 for actively assuring that correct channel selections are made without the need to turn off a laser module 110, or its output transmissions, and without corrupting any output data.

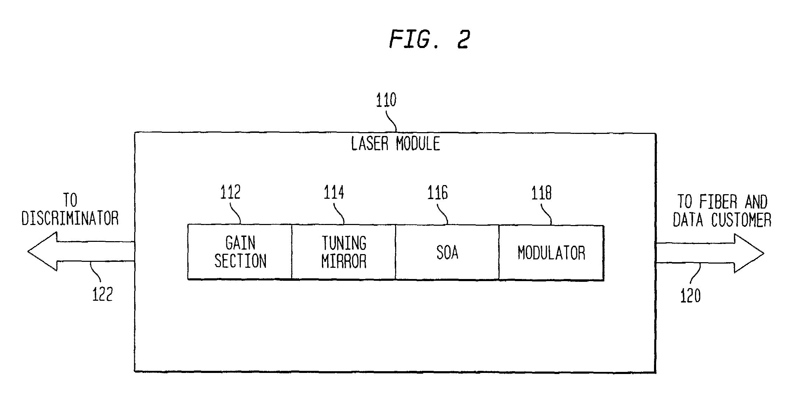

Referring to Fig. 2, the laser module 110 shown in Fig. 1 includes a gain section 112 and a tuning mirror section 114. Unique to the illustrated laser module 110 are a semiconductor optical amplifier (SOA) 116 and an electroabsorption (EA) modulator 118.

The gain section 112 produces laser light for the module 110. The tuning mirror section 114 selects a wavelength for the output signals 120, 122 of the module 110. The tuning mirror section 114 can be, for example, a tuning section typically found in a distributed Bragg Reflector (DBR) laser. A DBR laser has an internal structure that can adjust the period of the reflections inside the laser. A DBR is a periodic structure whose wavelength dependent reflection coefficient varies with applied current. The wavelength dependence of the reflection can be used to achieve a wavelength-dependent cavity gain for a laser using a periodic structure at one (or both) ends of the laser structure. Photons produced by pumping the semiconductor laser with electrons (i.e. an applied external current) bounce back and forth between the facets of the laser structure. The facets are typically the exterior edges of the laser formed by cleaving the device along a crystal plane. These facets are mirror like in their reflection behavior. The DBR laser has an internal "mirror", the Bragg reflector, that is a buried (i.e. internal to the device) mirror that can be electrically adjusted to alter the place the reflection occurs, and hence the wavelength of emitted light. The tuning mirror section 114 operates in this manner.

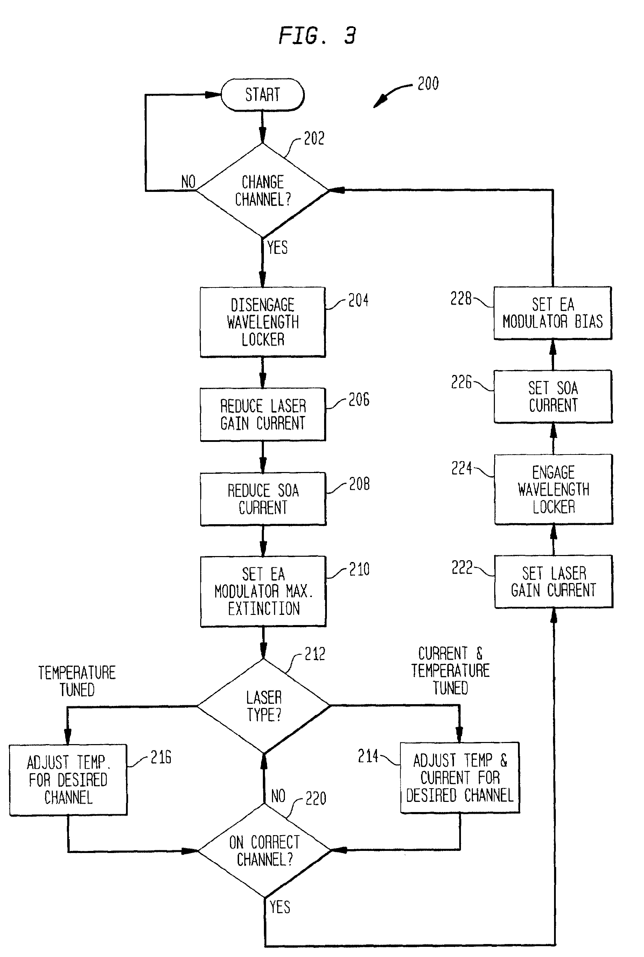

As will be discussed below, the module 110 will also be temperature tunable. It is desirable that the tuning mirror section 114 be the primary wavelength selection/tuning device for the module 110 and thus, the system 100. Temperature will be used as a secondary means for selecting the proper wavelength. The SOA 116 compensates for any losses attributable to the tuning mirror section 114. The EA modulator 118 encodes and transmits the laser output 120. As will become apparent from the description of Fig. 3, the SOA 116 and EA modulator 118 make it possible to leave the laser module on and transmitting during a channel selection process, which helps assure that the proper wavelength and channel are selected.

Referring again to Fig. 1, the laser module 110 is mounted on a Thermo-Electric Cooler (TEC) 124. A submount (not shown) between the laser module 110 and the TEC 124 can be used for thermal expansion matching if so desired. As noted above, the module 110 is tuned using a tuning mirror section 114 (Fig. 2) and is also temperature tunable. As known in the art for temperature tuned lasers, the output of laser module 110 can be adjusted by modifying its temperature. The temperature of laser module 110 can be adjusted by varying the temperature of TEC 124. A thermistor 126 is used to monitor the temperature of the module 110. The temperature of TEC 124 is varied based on a TEC control signal from a controller 160 through a digital to analog (D/A) controller output 176.

Controller 160 may include a programmable logic device, one example being a microprocessor. If a microprocessor is used, it may be any conventional general purpose single- or multi-chip microprocessor, or may be any conventional special purpose microprocessor such as a digital signal processor. It should be appreciated that D/A and A/D converters external to the controller 160 can be used to convert any output or input of the controller 160 and the invention is not to be limited to a controller 160 having internal D/A and A/D conversion capabilities.

Controller 160 monitors and controls the output of the laser module 110 as will be discussed below. The module 110 generates a laser output 120 and a backface output 122. A lens 121 may be provided to focus the laser output 120. The laser output 120 is transmitted over an optical link, such as a fiber optic cable (not shown).

The backface output 122 is used as an input to a Fabret-Perot etalon optical discriminator circuit 130. The Discriminator 130 contains a lens 132, an optical splitter 134, two photodiodes 136, 142 and an etalon filter 140. The backface output 122 is provided to the splitter 134 and split into two separate discriminator signals 134a, 134b. The first discriminator signal 134a, is input to the first photodetector 136 to convert the signal 134a (which is an optical signal) into an electrical signal 138 (hereinafter referred to as the "reference photodiode output 138"). The reference photodiode output 138 is input to a first photodiode amplifier circuit 150, which may include for example, operational amplifiers 150a, 150b and feedback resistor 150c, to form a reference signal 300. The reference signal 300 is input into controller 160 via an analog to digital (A/D) input 164. The first photodiode 136, reference photodiode output 138, reference signal 300 and the first amplifier circuit 150 form a conventional "reference path" used by the controller during wavelength stabilization and channel selection.

The second discriminator signal 134b is input to the etalon filter 140. The output from the etalon filter 140 is input to the second photodetector 142 to convert the signal 134b (which is an optical signal) into an electrical signal 144 (hereinafter referred to as the "etalon photodiode output 144"). The etalon photodiode output 144 is input into a second photodiode amplifier circuit 152, which may include for example operational amplifiers 152a, 152b and feedback resistor 152c, to form an etalon signal 310. The etalon signal 310 is input into controller 160 via an analog to digital (A/D) input 162. The etalon filter 140, second photodiode 142, etalon photodiode output 144, etalon signal 310 and the second amplifier circuit 152 form a conventional "etalon path" used by the controller in conjunction with the reference path during wavelength stabilization and channel selection. The etalon path in conjunction with the reference path form what is commonly known as a wavelength stabilization system.

The controller 160 supplies a tuning signal to the module 110 via a D/A output 172. As will be discussed below, this tuning signal is used to control the tuning mirror section 114 (Fig. 2) so that it selects the desired wavelength. The controller 160 supplies a modulator bias signal to the module 110 via another D/A output terminal 166. The controller 160 has suitable driver circuits to level shift and buffer the outputs of the SOA 116 and EA modulator 118. The controller 160 supplies a SOA current to the module 110 via D/A output terminal 174. The controller via D/A output 178 supplies a current supply control voltage to a laser current supply 154, which uses this voltage to supply a laser gain current to the module 110. As will be discussed below, the modulator bias signal, SOA current and laser gain current are used to control the EA modulator 118, SOA 116 and gain section 112, respectively so that the transmission power of the laser output 120 (Fig. 2) is reduced below, or raised to, a level capable of being seen by a receiver connected to the laser output 120 (i.e., a far end user of the system 100). This capability makes it possible to leave the laser module 110 on and transmitting during the channel selection process (i.e., tuning of the DBR mirror section 114 and adjustment of the TEC 124), which helps assure that the proper wavelength and channel is selected. The backface output 122 is not dimmed because it is not effected by the EA modulator 118. That is, separate controls are used to dim the output 120 of the laser module 110 while maintaining sufficient light transmission from the backface output 122. This is a desirable feature of the present invention and is achieved by having four sections in the laser module 110. The gain section 112 serves as the laser of the module 110. The tuning mirror 114 controls the optical path length and wavelength being emitted. The SOA 116 provides gain while the EA modulator 118 is used to add the data to be transmitted. By setting the modulator 118 to maximum distinction (i.e., essentially turning it off) and by turning the gain of the SOA 116 down, the light emitted from the fiber 120 can be dimmed but sufficient light is emitted from the backface output 122.

The controller 160 is capable of loading therein a computer software program 190 via an input/output (I/O) terminal 170. The I/O terminal 170 can be a serial port, universal bus or any other terminal or interface capable of inputting the instructions and data portions of a computer software program including an Ethernet or other network port. The controller 160 contains non-volatile and volatile memory (not shown) required to store and run the input software program 190. It is desirable that non-volatile memory be used to store the program 190 and any data required by the program so that the system 100 can operate in a stand alone mode. It is also desirable that the controller 160 contain volatile memory to be used as temporary storage while the program 190 is executing. It should be appreciated that the exact architecture of the controller 160 is not important as long as the controller 160 can execute the method 200 of the present invention (Fig. 3).

Fig. 3 illustrates an exemplary method 200 of actively assuring correct channel selection in the system 100 of Fig. 1. Referring now to Figs. 1 and 3, preferably, the method 200 is implemented in software that is downloaded into and executed by the controller 160. It should be appreciated that the method 200 of the present invention can be implemented in hardware or a combination of hardware and software. In particular, the method 200 can be implemented in an application specific integrated circuit (ASIC) or a field programmable gate array (FPGA).

The method 200 begins when the controller 160 checks to see if a channel change is required (step 202). Typically, the controller 160 receives a channel change request from an operational panel of the system (not shown). It should be appreciated that any conventional technique for requesting the controller 160 to change a channel can be used. The exact manner in which the controller 160 receives and inputs a request for a channel change is not important. The method 200 will continuously loop at step 202 if the controller 160 determines that a channel change is not required.

If at step 202 it is determined that a channel change is required, the method 200 continues at step 204 where the wavelength locker mechanism is disengaged by the controller 160 by any conventional technique. The wavelength locker can be implemented anywhere in the optical path and can be implemented internal to the laser module 110 or external in a separate device. It is desirable, however, to place the wavelength locker in the Fabret-Perot etalon optical discriminator circuit 130 internal to the laser module 110. The following sequence of steps (i.e., steps 206 to 210) are designed to reduce the transmission power (also referred to herein as fiber power) of the laser output 120 to a level below a level capable of being seen by a receiver connected to the laser output 120 (i.e., a far end user of the system). This capability makes it possible to leave the laser module 110 on and transmitting during the method 200, which helps assure that the proper wavelength and channel is selected.

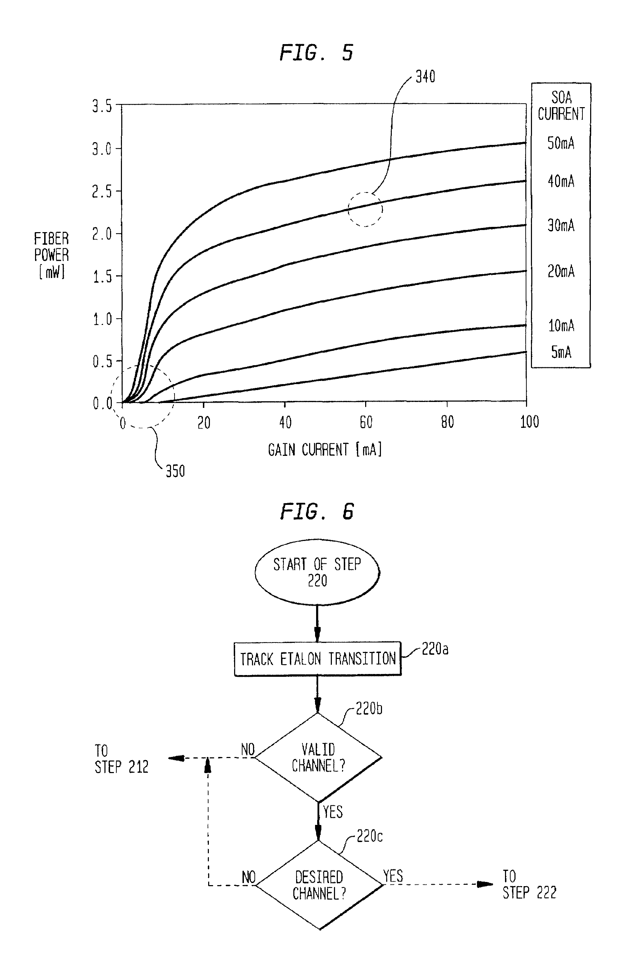

The correlation between the gain and SOA currents and the resultant fiber power is best illustrated by the example fiber power vs. current curves illustrated in Fig. 5. According to this example, the area on the curves designated by reference numeral 340 is used to illustrate the normal operational conditions for laser gain current and SOA current and the resultant fiber power. Normal operational conditions in this example means that the laser output 120 is detectable by a receiver connected to the laser output 120 (i.e., a far end user of the system). According to this example, the normal operational conditions 340 indicate that the SOA current is approximately 40 mA, the laser gain current is approximately 60 mA and the resultant fiber power is approximately 2.25 mW.

As noted earlier, it is undesirable to change wavelengths while transmitting data on the fiber optical link. Thus, the gain and SOA current is preferably reduced to cause the fiber power to drop well below the normal level so that the laser output 120 is not detectable by a receiver connected to the laser output 120 (as noted earlier the backface output 122 is not dimmed unless the gain section bias is reduced). This is referred to herein as the "reduced operational conditions" or the "dim laser operating conditions." The area on the curves designated by reference numeral 350 is used to illustrate the reduced operational conditions for laser gain current and SOA current and the resultant fiber power. Thus, to accomplish one of the goals of the method 200, i.e., leaving the laser module 110 on and transmitting during the channel selection process without corrupting any data, the SOA and laser gain currents should be reduced into the reduced operational conditions 350. According to this example, the reduced operational conditions 350 indicate that the SOA current is approximately 5 mA, the laser gain current is less than 40 mA and the resultant fiber power into the EA modulator is approximately 0.25 mW. Less gain current may be used so long as the laser module 110 is providing a sufficient backface output 122.

Referring to Figs. 1-5, at step 206, the laser gain current, if necessary, is reduced. This is accomplished when the controller 160 outputs a current supply control voltage to the laser current supply 154 that will cause the supply 154 to reduce the laser gain current. At step 208, the SOA current is reduced by the controller 160. At step 210, the EA modulator 118 (Fig. 2) is set to its maximum extinction via the EA bias signal. Maximum extinction is typically greater than 10 dB. At this point, the transmission power of the laser output 120 is reduced to a level below a level capable of being seen by a receiver connected to the laser output 120 (i.e., it is reduced to the reduced operational conditions 350 illustrated in Fig. 5). The laser gain and SOA currents and the EA bias signal can be generated by the controller 160 with the use of look-up tables or other databases. For example, there will be a look-up table for the SOA current that will have the correlation between the reduced and normal operational conditions and the resultant SOA current for these conditions or any condition along the curves illustrated in Fig. 5.

At step 212, the actual process of changing the channels is initiated. As noted above, the laser module 110 is tunable via the tuning mirror section 114 (i.e., current tunable) and also by way of the TEC 124 (i.e., temperature tunable). It should be appreciated that a laser module that is only temperature tuned, like the majority of today's lasers, could be used in the system 100. This could happen in the situation where an existing system having a laser module that does not include a tuning mirror section 114 is upgraded to include the teachings of the present invention (i.e., SOA 116, modulator 118 and the method 200). Thus, the method 200 will check to see what type of laser module is installed in the system. That is, at step 212, the method 200 will determine whether the laser type is temperature tuned or whether it is current and temperature tuned before proceeding to change the channel.

If at step 212 it is determined that the laser type is current and temperature tuned, the method continues at step 214. At step 214 the tuning signal and tuning temperature are adjusted to values corresponding to the wavelength for the desired channel. This is done when the controller 160 outputs a new tuning signal from output 172 and a new TEC control signal from output 176. The new tuning signal and new TEC control signal can be generated by the controller with the use of look-up tables or other database. For example, there will be a look-up table for the tuning signal that will have the correlation between all wavelengths, channels and tuning signal required to obtain these wavelengths/channels. Once the controller determines the proper tuning signal for the desired wavelength, it is output to the laser module 110.

Similarly, there will be a look-up table for the TEC temperature that will have the correlation between all wavelengths, channels and temperatures required to obtain these wavelengths/channels. The values in the look-up table are defined during the calibration of laser module 110 based on the response of module 110 under specific operating conditions and can be stored, for example, in a memory of controller 160. For temperature tuning, the controller 160 would use the look-up table to obtain the requisite temperature for the desired wavelength. Once determined, the controller 160 inputs the current temperature from the thermistor 126, calculates the amount of heating or cooling required to set the TEC 124 to the temperature corresponding to the desired wavelength and drives the TEC 126 to this temperature using the TEC control signal. It is desired that the tuning mirror be adjusted initially and the temperature be adjusted subsequently until the etalon stabilizes and locks onto the correct wavelength for the desired channel.

It should be understood that the wavelength characteristics of the laser module 110 may vary over time as the module 110 ages. Thus, as the laser module 110 ages, the values in the look-up tables may no longer be accurate. To overcome this problem, the look-up tables can be supplemented by controller 160, such as for example by a "learning" algorithm using historical statistical data to predict and adapt to variations in the module 110 as it ages. Alternatively, new look-up tables can be downloaded into the controller 160 (via new software 190) when it appears that the wavelength characteristics are beginning to vary.

If at step 212 it is determined that the laser type is temperature tuned only, the method continues at step 216. At step 216 the tuning temperature is adjusted as described above for step 214. After either step 214 or 216, the method continues at step 220.

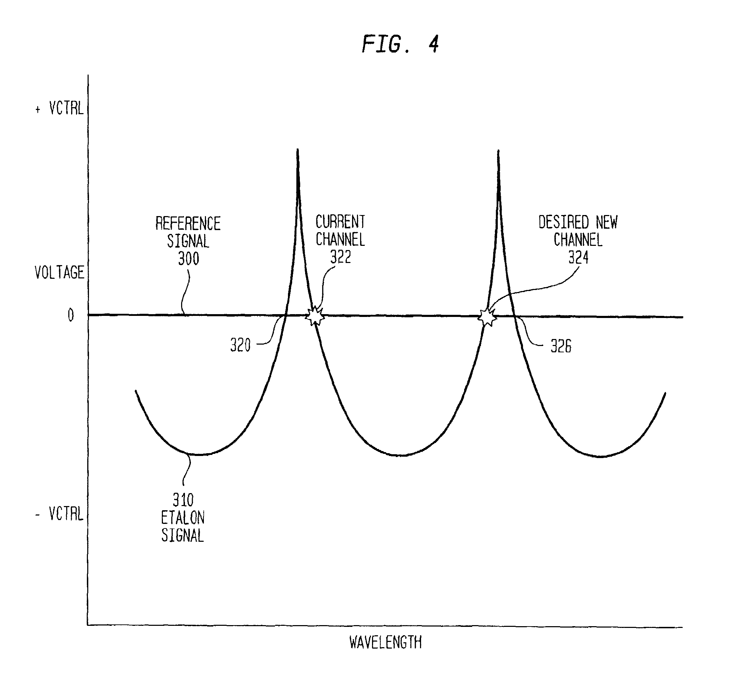

Thus, whether the laser type is temperature and current tuned (step 214) or temperature tuned only (step 216), the method continues at step 220 where it is determined if the laser module is tuned to the correct channel. Fig. 4 illustrates exemplary reference and etalon signals 300, 310 used during this process. Determining if the laser module is tuned to the correct channel requires tracking the etalon transitions 320, 322, 324, 326 of the etalon signal 310 using the reference signal 300 as a reference point for the transitions. As noted earlier, the reference signal 300 is obtained from the reference path portion of the system 100 and the etalon signal 310 is obtained from the etalon path portion of the system 100.

As known in the art, the etalon signal 310 will cross the reference signal 300 at specified points as the wavelength changes. These crossing points are known in the art as etalon transitions. Exemplary etalon transitions are designated by reference numerals 320, 322, 324 and 326. As also known in the art, some of these transitions 320, 322, 324, 326 correspond to a channel. For example, transition 322 corresponds to the current channel and transition 324 corresponds to the desired channel. The other transitions 320, 326 may or may not correspond to a channel depending upon the specification of the laser module (that is, there may be a requirement that each channel must be separated from an adjacent channel by a predetermined frequency and if transition 320 is too close to transition 322, then transition 320 would not correspond to a channel in the system). The method 200 is capable of tracking the etalon signal 310 to determine when transitions 320, 322, 324, 326 occur. In addition, the method 200 is capable of distinguishing between transitions that correspond to channels and those that do not. Any conventional technique for tracking the etalon signal 310 and the etalon transitions 320, 322, 324, 326 can be used.

Fig. 6 illustrates the process for determining whether the laser module is on the correct channel (step 220). At step 220a, the etalon signal 310 is tracked to determine an etalon transition. At 220b it is determined if the tracked transition corresponds to a valid channel. If it is determined that the transition corresponds to an invalid channel, the method continues at step 212 for further laser tuning. If it is determined at step 220b that the transition corresponds to a valid channel, then the method continues at step 220c to determine if the transition corresponds to the desired/requested channel. If it is determined that the transition does not correspond to the desired channel, the method continues at step 212 for further laser tuning.

If it is determined at step 220c that the transition corresponds to the desired-channel, then the method continues at step 222. Steps 222-228 are used to lock the channel and increase the transmission power of the output 120 to a level capable of being seen by a receiver connected to the laser output 120 (i.e., a far end user of the system). Specifically, at step 222 the laser gain current is set to its normal operating condition (described above with reference to step 206). At step 224, the wavelength locker is engaged to lock the wavelength for the desired channel. Once the wavelength is locked, the SOA current is set to its normal operational condition (step 226) and the EA modulator bias is set to its normal operating condition (step 228). At this point, a receiver connected to the laser output 120 is capable of detecting the laser output 120 and receiving the information transmitted on the requested channel.

Thus, the method 200 and system 100 of the present invention is capable of actively assuring that correct channel selections are made without the need to turn off its laser module 110 and without corrupting any output data.

The method of the present invention is implemented in software and the software instructions and data can be stored in PROM, EEPROM or other non-volatile memory connected to or contained within the controller. The software used in the present invention can be stored on a hard drive, floppy disc, CD-ROM or other permanent or semi-permanent storage medium and subsequently transferred to the memory of the controller. The program embodying the method of the present invention can also be divided into program code segments, downloaded, for example, from a server computer or transmitted as a data signal embodied in a carrier wave to the controller as is known in the art.

While the invention has been described in detail in connection with the preferred embodiments known at the time, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Accordingly, the invention is not to be seen as limited by the foregoing description, but is only limited by the scope of the appended claims.

## Claims

1. A method of controlling a laser based system having a first output during a channel tuning operation, said method comprising the steps of:
reducing transmission power of the first output to a level where the first output can not be detected by a far end user of the system;
tuning the laser source toward a desired channel;
determining if the first output is on the desired channel; and
if it is determined that the first output is on the desired channel, increasing transmission power of the output to a level where the output can be detected by a far end user of the system.

2. The method of claim 1 wherein if it is determined that the first output is not on the desired channel, said method further comprises repeating said tuning and determining steps until the first output is on the desired channel.

3. The method of claim 1 wherein the laser source comprises a gain section, modulator and an amplifier circuit, and wherein said reducing step comprises:
reducing a current of the gain section below a normal operational condition;
reducing a current of the amplifier below a normal operational condition; and
biasing the modulator below a normal operational condition.

4. The method of claim 1 wherein the laser source comprises a gain section, modulator and an amplifier, and wherein said step of increasing transmission power comprises:
increasing a current of the gain section to a normal operational condition;
increasing a current of the amplifier to a normal operational condition; and
biasing the modulator to a normal operational condition.

5. The method of claim 1 wherein the laser source comprises a tuning mirror section for tuning the laser source with a tuning signal and said tuning step comprises:
determining a tuning signal corresponding to the desired channel;
generating the tuning signal corresponding to the desired channel; and
providing the tuning signal to the laser source.

6. The method of claim 5 wherein the laser source is further adapted to be temperature tuned and said tuning step further comprises:
determining a tuning temperature corresponding to the desired channel;
generating the tuning temperature corresponding to the desired channel; and
providing the tuning temperature to the laser source.

7. The method of claim 1 wherein the laser source is adapted to be temperature tuned and said tuning step further comprises:
determining a tuning temperature corresponding to the desired channel;
generating the tuning temperature corresponding to the desired channel; and
providing the tuning temperature to the laser source.

8. The method of claim 1 wherein the laser source has a second output and said determining steps comprises:
splitting said second output into first and second signals;
tracking when the first signal crosses the second signal; and
determining if a wavelength of the first signal at the crossing corresponds to the desired channel.

9. The method of claim 8 wherein if it is determined that the wavelength of the first signal at the crossing does not correspond to the desired channel, said method further comprises repeating said tuning step to said step of determining if a wavelength of the first signal at the crossing corresponds to the desired channel until the wavelength of the first signal at the crossing corresponds to the desired channel.

10. The method of claim 8 wherein said first signal is an etalon signal and said second signal is a reference signal.

11. A method of controlling a laser based system having a first output during a channel tuning operation, said method comprising the steps of:
reducing transmission power of the first output to a level where the first output can not be detected by a far end user of the system;
tuning the laser source to a desired channel while the laser source is transmitting the first output;
determining if the first output is on the desired channel; and
if it is determined that the first output is on the desired channel, increasing transmission power of the output to a level where the output can be detected by a far end user of the system, or if it is determined that the first output is not on the desired channel, repeating said tuning and determining steps until the first output is on the desired channel.

12. The method of claim 11 wherein the laser source comprises a gain section, modulator and an amplifier, and wherein said reducing step comprises:
reducing a current of the gain section below a normal operational condition;
reducing a current of the amplifier below a normal operational condition; and
biasing the modulator below a normal operational condition.

13. The method of claim 11 wherein the laser source comprises a gain section, modulator and an amplifier, and wherein said step of increasing transmission power comprises:
increasing a current of the gain section to a normal operational condition;
increasing a current of the amplifier to a normal operational condition; and
biasing the modulator to a normal operational condition.

14. The method of claim 11 wherein the laser source comprises a tuning mirror section for tuning the laser source with a tuning signal and said tuning step comprises:
determining a tuning signal corresponding to the desired channel;
generating the tuning signal corresponding to the desired channel; and
providing the tuning signal to the laser source.

15. The method of claim 14 wherein the laser source is further adapted to be temperature tuned and said tuning step further comprises:
determining a tuning temperature corresponding to the desired channel;
generating the tuning temperature corresponding to the desired channel; and
providing the tuning temperature to the laser source.

16. The method of claim 11 wherein the laser source is adapted to be temperature tuned and said tuning step further comprises:
determining a tuning temperature corresponding to the desired channel;
generating the tuning temperature corresponding to the desired channel; and
providing the tuning temperature to the laser source.

17. The method of claim 11 wherein the laser source has a second output and said determining steps comprises:
splitting said second output into first and second signals;
tracking when the first signal crosses the second signal; and
determining if a wavelength of the first signal at the crossing corresponds to the desired channel.

18. The method of claim 17 wherein if it is determined that the wavelength of the first signal at the crossing does not correspond to the desired channel, said method further comprises repeating said tuning step to said step of determining if a wavelength of the first signal at the crossing corresponds to the desired channel until the wavelength of the first signal at the crossing corresponds to the desired channel.

19. The method of claim 17 wherein said first signal is an etalon signal and said second signal is a reference signal.

20. A method of controlling a laser based system having first and second outputs during a channel tuning operation, said method comprising the steps of:
reducing transmission power of the first output to a level where the first output can not be detected by a far end user of the system;
tuning the laser source while the laser source is transmitting the first and second output;
splitting said second output into an etalon signal and a reference signal;
tracking when the etalon signal crosses the reference signal;
determining if a wavelength of the etalon signal at the crossing corresponds to the desired channel; and
if it determined that the wavelength of the etalon at the crossing corresponds to the desired channel, increasing transmission power of the output to a level where the output can be detected by a far end user of the system, or if it is determined that the wavelength of the etalon signal at the crossing does not correspond to the desired channel, repeating said tuning step to said determining step until the wavelength of the etalon signal at the crossing corresponds to the desired channel.

21. A laser system comprising:
a laser source having a first output; and
a controller for controlling said laser source, said controller actively assuring channel selection of a desired channel for said laser source by reducing transmission power of said first output to a level where said first output can not be detected by a far end user of the system, tuning said laser source, determining if said first output is on the desired channel; and if it is determined that said first output is on the desired channel, increasing transmission power of said first output to a level where said first output can be detected by a far end user of the system.

22. The system of claim 21 wherein if said controller determines that said first output is not on the desired channel, said controller continues to tune said laser source until it is determined that said first output is on the desired channel.

23. The system of claim 21 wherein said laser source comprises:
a gain section;
a modulator; and
an amplifier, and
wherein said controller reduces the transmission power of said first output by reducing a current of said gain section below a normal operational condition, reducing a current of said amplifier below a normal operational condition, and biasing said modulator below a normal operational condition.

24. The system of claim 21 wherein said laser source comprises:
a gain section;
a modulator; and
an amplifier, and
wherein said controller increases the transmission power of said first output by increasing a current of said gain section to a normal operational condition, increasing a current of said amplifier to a normal operational condition, and biasing said modulator to a normal operational condition.

25. The system of claim 21 wherein said laser source comprises:
a tuning mirror section for tuning the laser source with a tuning signal, wherein said controller tunes said laser source by determining a tuning signal corresponding to the desired channel, generating the tuning signal corresponding to the desired channel, and providing the tuning signal to said tuning mirror section.

26. The system of claim 25 wherein said laser source is further adapted to be temperature tuned, said controller further tunes said source by determining a tuning temperature corresponding to the desired channel, generating the tuning temperature corresponding to the desired channel, and providing the tuning temperature to said laser source.

27. The system of claim 21 wherein said laser source is adapted to be temperature tuned, said controller further tunes said source by determining a tuning temperature corresponding to the desired channel, generating the tuning temperature corresponding to the desired channel, and providing the tuning temperature to said laser source.

28. The system of claim 21 wherein said laser source has a second output and said controller determines if said first output is on the desired channel by splitting said second output into first and second signals, tracking when said first signal crosses said second signal, and determining if a wavelength of said first signal at the crossing corresponds to the desired channel.

29. The system of claim 28 wherein if said controller determines that the wavelength of said first signal at the crossing does not correspond to the desired channel said controller continues to tune said laser source until the wavelength of said first signal at the crossing corresponds to the desired channel.

30. The system of claim 28 wherein said first signal is an etalon signal and said second signal is a reference signal.

31. The system of claim 21 wherein said controller is a programmed processor.

32. The system of claim 21 wherein said controller is an application specific integrated circuit.

33. The system of claim 21 wherein said controller is a field programmable gate array.

34. A laser system comprising:
a laser source having a first output; and
a controller controlling said laser source, said controller reducing transmission power of said first output to a level where said first output can not be detected by a far end user of the system, tuning said laser source while said laser source is transmitting said first output, determining if said first output is on a desired channel, and if it is determined that said first output is on the desired channel, increasing transmission power of said first output to a level where said first output can be detected by a far end user of the system, or if it is determined that said first output is not on the desired channel, continuing to tune said laser source until it is determined that said first output is on the desired channel.

35. A laser system comprising:
a laser source comprising a gain section, modulator and an amplifier, said laser source having first and second outputs; and
a controller controlling said laser source, said controller reducing a current of said gain section below a normal operational condition, reducing a current of said amplifier below a normal operational condition, and biasing said modulator below a normal operational condition to reduce transmission power of said first output to a level where the first output can not be detected by a far end user of the system, said controller tuning said laser source while said laser source is transmitting said first and second outputs, splitting said second output into an etalon signal and a reference signal, tracking when said etalon signal crosses said reference signal, determining if a wavelength of said etalon signal at the crossing corresponds to the desired channel, and if it is determined that the wavelength of said etalon at the crossing corresponds to the desired channel, said controller increasing the current of said gain section to a normal operational condition, increasing the current of said amplifier to a normal operational condition, and biasing said modulator to a normal operational condition to increase the transmission power of the first output to a level where the first output can be detected by a far end user of the system.

36. A laser system comprising:
a laser source comprising a gain section, modulator and an amplifier, said laser source having an output; and
a controller controlling said laser source, said controller controlling said gain section, modulator and amplifier to actively change channels in said system while said laser source is transmitting said output.

37. A laser system comprising:
a laser source comprising a gain section and a modulator, said laser source having an output; and
a controller controlling said laser source, said controller controlling said gain section and modulator to actively change channels in said system while said laser source is transmitting said output.

38. A laser system comprising:
a laser source comprising a gain section and an amplifier, said laser source having an output; and
a controller controlling said laser source, said controller controlling said gain section and amplifier to actively change channels in said system while said laser source is transmitting said output.
